(19)

Europäisches
Patentamt
European
Patent Office
Office européen
des brevets

(11) **EP 2 505 849 A1**

(12) **EUROPEAN PATENT APPLICATION**

(43) Date of publication:
**03.10.2012 Bulletin 2012/40**

(51) Int Cl.:
**F04D 27/02** (2006.01)

(21) Application number: **11159981.7**

(22) Date of filing: **28.03.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **SIEMENS AKTIENGESELLSCHAFT
80333 München (DE)**

(72) Inventor: **Ploeger, Frans
3400 Hilleroed (DK)**

(54) **Method and system for energy optimization of a centrifugal compressor**

(57) The present invention provides compressor control method (20) and system (1). The proposed method (20) comprises providing variable volumetric flow sizing of fluid through the compressor (2) at multiple operating points of the compressor (2), by a combination of adjustment of diffuser (7) geometry and adjustment of inlet guide vane (7) geometry of the compressor. For an operating point, a compressor head is determined based on a process input (21a) at said operating point. The compressor efficiency is controlled by determining a compressor speed at said operating point, using as input the compressor head and the volumetric flow sizing defined by the diffuser geometry and the inlet guide vane geometry at said operating point.

FIG 2

EP 2 505 849 A1

## Description

The present invention relates to centrifugal compressors, and in particular, to a control method to optimize compressor power consumption of a variable speed centrifugal compressor.

A centrifugal compressor generally includes a diffuser for reducing the speed of a fluid disposed downstream of the outlet side of an impeller to convert the dynamic energy into a static pressure. Variable geometry diffusers for centrifugal compressors have been considered in the past to provide a wide operating range. Variable geometry is achieved by pivoting the diffuser vanes to match the exit angle of the flow from the impeller and by adjusting the mechanical diffuser throat area. These adjustments make it possible to increase compressor efficiency, for example, by permitting greater flow under choke conditions while reducing the flow at which surge occurs.

Currently, power consumption of centrifugal compressors is optimized by using variable diffusers in conjunction with compressor speed control. In such a method, for multiple operating points of the compressor, volumetric flow sizing of fluid flow through the compressor is done by adjusting the position (i.e., geometry) of the variable diffuser. A compressor head is calculated for each operating point based on a process value (such as inlet temperature, discharge pressure, among others) at that operating point. Subsequently, an operating speed setpoint for that operating point is determined based on the volumetric flow sizing and the compressor head at that operating point.

The object of the present invention is to further optimize compressor power consumption with respect to the above mentioned state of the art.

The above object is achieved by the method according to claim 1 and the system according to claim 4

The underlying idea of the present invention is to combine speed control with adjustable diffuser geometry and adjustable inlet guide vanes to optimize compressor power consumption. It has been found herein that when volumetric flow sizing is controlled by a combination of adjustment of diffuser geometry and adjustment of inlet guide vane geometry, the compressor efficiency increases even as the operating point moves away from the design flow and design compressor head, which is not the case when the flow sizing is controlled by adjustable diffuser only. Thus by having speed control when the flow sizing of the compressor is controlled by a combination of adjustable diffuser and adjustable inlet guide vanes, it is possible to maintain a high compressor efficiency over a much wider range of operating points than is possible with only variable diffusers.

In a preferred embodiment, to maximize the compressor efficiency, the compressor speed is determined such that an operating coordinate, defined by the compressor head and the volumetric flow sizing at said operating point, lies on or substantially proximate to an upper boundary of a plot of compressor head versus volumetric flow sizing for different compressor efficiencies, for said compressor speed.

The present invention is further described hereinafter with reference to illustrated embodiments shown in the accompanying drawings, in which:

FIG 1    schematically illustrates a compressor system in accordance with one embodiment of the present invention,

FIG 2    is a flowchart illustrating an exemplary compressor control method in accordance with one embodiment of the present invention,

FIG 3    is a graph showing a plot of head versus volumetric flow sizing for different compressor efficiencies for a constant speed of a compressor, when the flow sizing is controlled by adjustable diffuser only, and

FIG 4    is a graph showing a plot of head versus volumetric flow sizing for different compressor efficiencies for a constant speed of a compressor, when the flow sizing is controlled by a combination of adjustable diffuser and adjustable inlet guide vane.

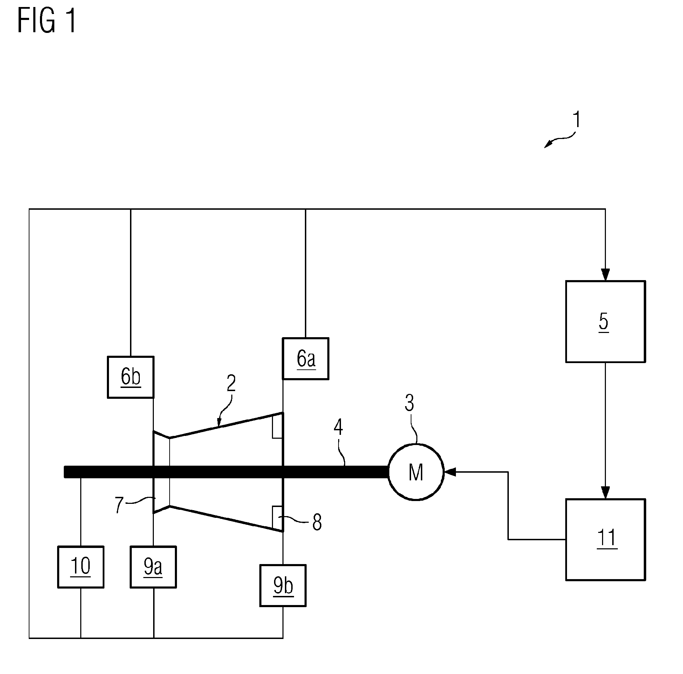

Referring to FIG 1 is illustrated a compressor system 1 according to an exemplary embodiment of the present invention. The system 1 includes a centrifugal compressor 2 driven by an electrical motor 3 via a shaft 4. A computerized control means 5 controls the operation of the compressor 2 based on a process input at each operating point of the compressor 2. The process input includes one or more process values, for example, the temperature of the compressor fluid at section (inlet temperature), pressure of the compressor fluid at discharge (discharge pressure), temperature of the compressor fluid at discharge (discharge temperature), barometric pressure, relative humidity, among others.

Accordingly, a sensor module may be provided for measuring one or more of these process values. In this example, the sensor module includes a temperature sensor 6a and a pressure sensor 6b appropriately disposed for measuring the compressor inlet temperature and discharge pressure, respectively. The control means 5 receives the sensed process values from the sensors 6a,6b. The remaining process values may be obtained as fixed values, for example from a performance data sheet (PDS) of the compressor. Alternately, additional sensors may be provided for measuring one or more of these remaining process values. On the other hand, in a low cost embodiment, only a compressor inlet temperature sensor may be provided, while the rest of the process values may be obtained as fixed values from the compressor PDS.

The computerized control means 5 may include, for example, a programmable logic controller (PLC), a microcontroller, a desktop computer, or even a general purpose microprocessor.

To optimize flow losses, fluid flow through the compressor 2 may be aerodynamically sized at various operating points of the compressor 2. To that end, the compressor 2 is provided with an adjustable diffuser 7 and an adjustable inlet guide vane 8. The inlet guide vanes 8 influence the incidence angle of the inlet flow to the impeller and thus influences the relative speed of the compressor fluid. The diffuser 7, disposed downstream of the impellers, reduces the speed of a fluid to convert the dynamic energy into a static pressure. In accordance with the present invention, volumetric sizing of fluid flow through the compressor 2 is done by adjustment of the geometry of the diffuser 7 and the inlet guide vanes, in combination.

In the illustrated embodiment, sensors 9a and 9b measure the geometrical setting (i.e., position) of the diffuser 7 and the inlet guide vanes 8 respectively for each operating point and communicate the sensed data to the control means 5. The volumetric flow sizing may be directly obtained based on the inputs from the sensors 9a and 9b. For any operating point of the compressor 2, based on the volumetric flow sizing defined by the inputs from sensors 9a,9b and the measured process values obtained from the sensors 6a,6b, the control means 5 determines an operating speed setpoint of the compressor 2, using a control algorithm in accordance with the present invention that is described in detail hereinafter. A rotational speed sensor 10 measures the actual compressor shaft speed and communicates the same to the control means 5 via a feedback data line. Based on the determined speed setpoint and the measured feedback speed, the control means 5 communicates a control signal to a variable frequency drive 11 for controlling the rotational speed of the motor 3, and thereby, the rotational shaft speed of the compressor 2 based on a closed loop feedback control mechanism.

Embodiments of the present invention described hereinafter provide a control algorithm for determining an operational speed setpoint of a compressor based on aerodynamic flow sizing at the compressor and for controlling the compressor shaft speed based on the determined speed setpoint.

In the context of the illustrated embodiments, the term "head" or "compressor head" refers to the isentropic head (H) of a compressor, which is defined as a difference between the enthalpy of the compressor fluid at inlet (or suction) pressure and temperature and enthalpy of the compressor fluid at discharge pressure and suction entropy. Mathematically, the isentropic head (H) may be represented by the relationship (1) below:

$$H = f\left(Cp, Ti, \frac{P2}{P1}, k\right) \qquad (1)$$

wherein,
*Cp* specific heat of the compressor fluid at constant pressure *Ti* is the compressor inlet temperature,
*P1* is the inlet or suction pressure
*P2* is the discharge pressure, and
*k* is the ratio of specific heats of the compressor fluid.

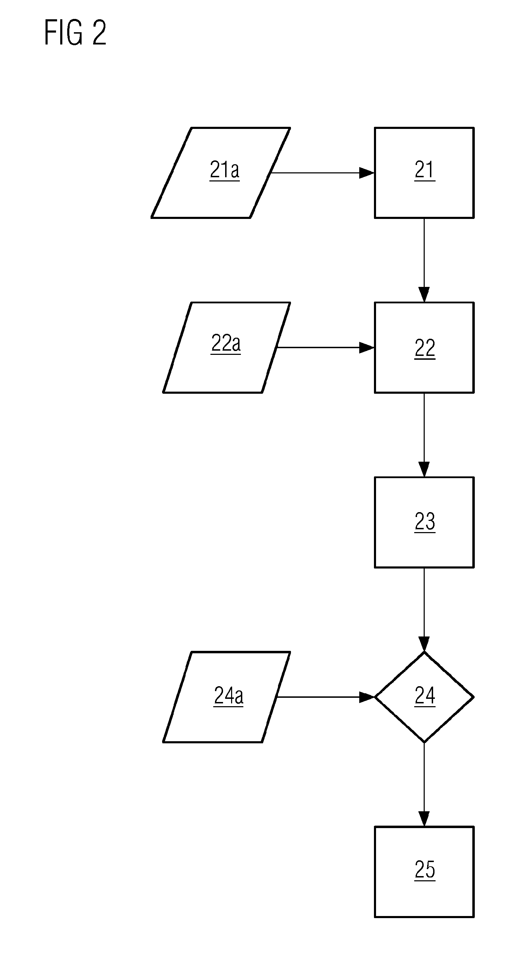

FIG 2 is a flowchart illustrating an exemplary control algorithm 20, in accordance with one embodiment of the present invention. In the present example, the control algorithm is executed by a PLC. However, in alternate embodiments, the control algorithm may be executed by any other computerized control means, such as a microcontroller, a desktop computer, or even a general purpose microprocessor.

At any operating point, the inputs to the algorithm 20 include the process input 21a, an input 22a indicating sensed the positions or geometrical settings of the diffuser and inlet guide vanes at that operating point and an input 24a indicating the sensed compressor speed feedback.

As mentioned above, the process input 21a include process values, including, for example, the compressor inlet temperature, the discharge pressure, discharge temperature, primary filter pressure loss, secondary filter pressure loss, barometric pressure, and relative humidity. These inputs may be obtained dynamically, for example, from respective sensors provided in the compressor package. In an alternate (low cost) embodiment, the above dynamic inputs can be limited to just inlet temperature. The other process values can be entered as fixed numbers from the performance data sheet (PDS) of the compressor.

At block 21, the compressor head is determined for that operating point based on the process values obtained from the process input 21a. This includes, firstly, calculation of various constants which form the basis for determining the compressor head. These constants include, for example, the saturation pressure of water, partial pressure of the water in the flow stream, specific gas constant of the compressor fluid and ratio of specific heats of the compressor fluid.

Then, based on the relationship (1) mentioned above, the compressor head (H) is determined using the process values in the process input 21a, and the calculated constants. The head determined at block 23 may further take into account an input 20a indicating surge margin, which is typically a fixed value based on design data. Determination of the head at block 21 is typically based on several fixed and universal constants, which may be further received as inputs to the algorithm 20.

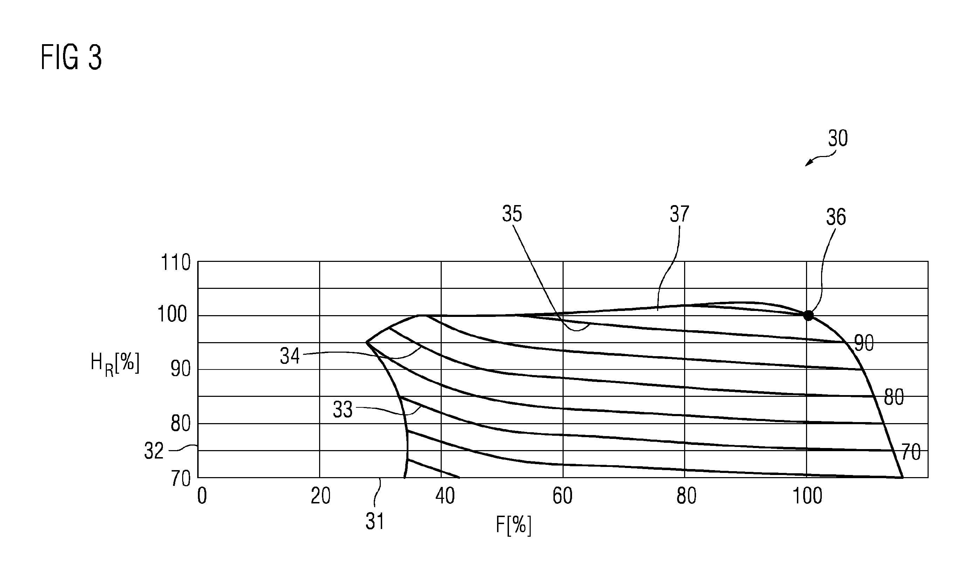

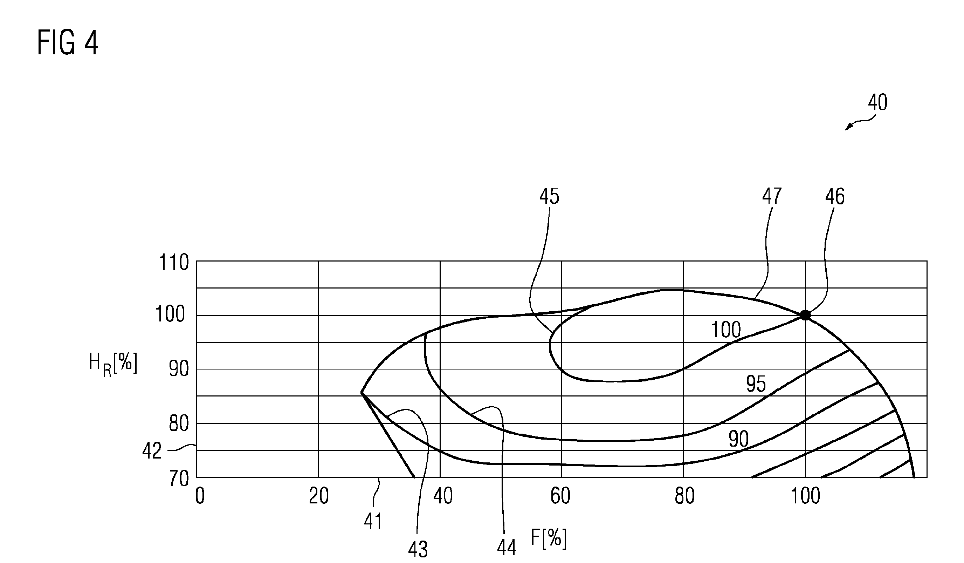

At block 22, based on the sensor input 22a, the volumetric flow sizing of fluid flow through the compressor is determined for the given operating point. Block 23 involves determination of a compressor speed setpoint using as input the compressor head (determined at block 21) and the volumetric flow sizing defined by the positions of the adjustable diffuser and the adjustable inlet guide vanes (determined at block 22). The inventive algorithm provides optimized power consumption by the compressor by providing speed control in conjunction with adjustable diffuser and adjustable inlet guide vanes. The principle of the speed control algorithm is illustrated referring to FIG 3 and FIG 4.

FIG 3 is a graph showing a plot 30 of head versus volumetric flow sizing for different compressor efficiencies for a constant speed of a compressor, when the flow sizing is controlled by adjustable diffuser only. Herein the axis 31 represents volumetric flow sizing F expressed as a percentage of a design flow sizing, and the axis 32 represents isentropic head $H_R$ expressed as a percentage of a design isentropic head. The curves 33, 34 and 35 represent the plot of head versus flow for constant relative compressor efficiencies of 70%, 80% and 90% respectively. The term relative compressor efficiency refers to the compressor efficiency expressed as a percentage of the maximum design efficiency. **(To the inventor: Can you please provide definition for "efficiency"? Is it isentropic efficiency or overall efficiency?).** The point 36 on the graph thus represents an operating coordinate at design operating point. It can be seen from FIG 3 that as the operating point moves away from 100% relative isentropic head and 100% relative flow sizing, the compressor efficiency is reduced.

However, in accordance with the present invention, a combination of adjustable diffuser and adjustable inlet guide vanes is used to vary the volumetric flow sizing. FIG 4 is a graph showing a plot 30 of head versus volumetric flow sizing for different compressor efficiencies for a constant speed of a compressor, when the flow sizing is controlled by a combination of adjustable diffuser and adjustable inlet guide vanes in accordance with the present invention. Herein the axis 41 represents volumetric flow sizing F expressed as a percentage of a design flow sizing, and the axis 42 represents isentropic head $H_R$ expressed as a percentage of a design isentropic head. The curves 43, 44 and 45 represent the plot of head versus flow for constant relative compressor efficiencies of 90%, 95% and 100% respectively. The point 46 on the graph thus represents an operating coordinate at design operating point. Unlike in FIG 3, it can be seen from FIG 4 that the compressor efficiency actually increases in some areas as the operating point moves away from 100% relative isentropic head and 100% relative flow sizing. Thus by having speed control when the flow sizing of the compressor is controlled by a combination of adjustable diffuser and adjustable inlet guide vanes, it is possible to maintain a high compressor efficiency over a much wider range of operating points than is possible with only variable diffusers.

In accordance with the illustrated embodiment, for maximizing the compressor efficiency, a speed setpoint of the compressor for a given operating point is determined such that the operating coordinate defined by the head and the flow sizing lies on or substantially proximate to the upper boundary of the plot of head versus flow sizing. The upper boundary is represented by the curves 37 and 47 in FIG 3 and FIG 4 respectively. It can be easily seen that in the case where flow sizing is controlled both by adjustable diffuser (FIG 4), the area around the upper boundary above the 100% efficiency is much larger than in the case where flow sizing is controlled by adjustable diffuser (FIG 3). Thus controlling flow sizing by a combination of adjustable diffuser and adjustable inlet guide vane allows the speed control for maximizing compressor efficiency to be established over a wider operating range.

Referring back to FIG 2, the compressor speed is controlled based on the speed set point determined at block 23 by providing the speed set point to a variable frequency drive (VFD). This includes determining positive and negative dead band windows around the speed setpoint obtained at block 23. The dead band windows are determined to control the speed value sent to the VFD to let the VFD react to a true change in conditions rather than noise. At block 24, it is determined whether the measured speed feedback obtained from the input 24a lies within or outside the positive and negative dead band windows. Finally, at block 25, the operating speed setpoint is provided to the VFD only if the measured speed feedback lies outside the positive and negative dead band windows.

Aspects of the above-described method may also be embodied in the form of computer program code containing instructions embodied in tangible media, such as floppy diskettes, CD-ROMs, hard drives, DVDs, or any other computer-readable storage medium, wherein, when the computer program code is loaded into and executed by a computer or controller, the aforementioned steps are implemented.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined by the below-mentioned patent claims.

**Claims**

1. A control method (20) for a compressor (2) comprising:

   - providing variable volumetric flow sizing of fluid through the compressor (2) at multiple operating points of the compressor (2), by a combination of adjustment of diffuser (7) geometry and adjustment of inlet guide vane (8) geometry of the compressor (2),
   - for an operating point, determining (21) a compressor head based on a process input (21a) at said operating point,
   - controlling an efficiency of the compressor (2) by determining (23) a compressor speed at said operating point, using as input the compressor head and the volumetric flow sizing defined by the diffuser geometry and the inlet guide vane geometry at said operating point.

2. The method (20) according to claim 1, wherein the compressor speed is determined such that an operating coordinate, defined by the compressor head and the volumetric flow sizing at said operating point, lies on or substantially proximate to an upper boundary (47) of a plot (40) of compressor head versus volumetric flow sizing for different compressor efficiencies, for said compressor speed.

3. A computer program product comprising computer readable media having computer readable program code embodied therein, said program code being executable by one or more controllers of a compressor to carry out the method (20) according to any of the preceding claims.

4. A compressor system (1), comprising:

   - a compressor (2) having an adjustable geometry diffuser (7) and adjustable geometry inlet guide vanes (8), the diffuser (7) and the inlet guide vanes (8) being adjustable in combination to provide a variable volumetric flow sizing of fluid through the compressor (2) at multiple operating points, and
   - computerized control means (5), said computerized control means including:

      - means for determining a compressor head based on a process input (21a) at an operating point,
      - means for controlling a compressor efficiency by determining a compressor speed at said operating point, using as input the compressor head and the volumetric flow sizing defined by the diffuser geometry and the inlet guide vane geometry setting at said operating point.

5. The system (1) according to claim 4, wherein the control means (5) is configured to determine the compressor speed such that an operating coordinate, defined by the compressor head and the volumetric flow sizing at said operating point, lies on or substantially proximate to an upper boundary (47) of a plot (40) of compressor head versus volumetric flow sizing for different compressor efficiencies, for said compressor speed.

6. The system (1) according to any of claims 4 and 5, wherein said computerized control means (5) includes a programmable logic controller.

7. The system (1) according to any of claims 4 to 6, wherein the compressor (s) is driven by an electrical motor (3), the further comprising a variable frequency drive (11) for controlling speed of the electrical motor (3) based on the determined compressor speed.

FIG 1

FIG 2

EP 2 505 849 A1

FIG 3

FIG 4

Europäisches
Patentamt

European
Patent Office

Office européen
des brevets

# EUROPEAN SEARCH REPORT

Application Number

EP 11 15 9981

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 761 981 A2 (EBARA CORP [JP]) 12 March 1997 (1997-03-12) * page 11, line 19 - line 24 * * page 12, line 32 - line 41 * * page 13, line 1 - line 10 * * page 15, line 8 - line 17 * * figures 8,19,21,22,24,25 * ----- | 1-6 | INV. F04D27/02 |
| A | EP 0 685 652 A2 (EBARA CORP [JP]) 6 December 1995 (1995-12-06) * column 7, line 50 - column 8, line 4 * * column 13, line 46 - column 14, line 9 * * figures 1,19 * ----- | 1-7 | |
| A | EP 1 321 679 A1 (CARRIER CORP [US]) 25 June 2003 (2003-06-25) * paragraphs [0030] - [0032], [0034] * * figures 1,15 * ----- | 1,3,4,6,7 | |
| A | EP 0 043 017 A1 (ATLAS COPCO AB [SE]) 6 January 1982 (1982-01-06) * page 1, line 1 - line 8 * * page 2, line 17 - line 21 * * page 3, line 5 - line 19 * * page 4, line 7 - line 18 * * figure 1 * ----- | 1,3,4,6,7 | TECHNICAL FIELDS SEARCHED (IPC) F04D |

The present search report has been drawn up for all claims

| Place of search | Date of completion of the search | Examiner |
|---|---|---|
| Munich | 11 August 2011 | Lange, Christian |

EPO FORM 1503 03.82 (P04C01)

## ANNEX TO THE EUROPEAN SEARCH REPORT
## ON EUROPEAN PATENT APPLICATION NO.

EP 11 15 9981

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2011

| Patent document cited in search report | | | Publication date | Patent family member(s) | | Publication date |
|---|---|---|---|---|---|---|
| EP 0761981 | A2 | 12-03-1997 | | CA | 2184882 A1 | 09-03-1997 |
| | | | | CN | 1536231 A | 13-10-2004 |
| | | | | CN | 1155630 A | 30-07-1997 |
| | | | | US | 5947680 A | 07-09-1999 |
| EP 0685652 | A2 | 06-12-1995 | | CA | 2149576 A1 | 20-11-1995 |
| | | | | CN | 1329218 A | 02-01-2002 |
| | | | | CN | 1118876 A | 20-03-1996 |
| | | | | US | 5683223 A | 04-11-1997 |
| EP 1321679 | A1 | 25-06-2003 | | NONE | | |
| EP 0043017 | A1 | 06-01-1982 | | BR | 8103981 A | 09-03-1982 |
| | | | | DE | 3023705 A1 | 19-05-1982 |
| | | | | DK | 277781 A | 26-12-1981 |
| | | | | ES | 8204085 A1 | 16-07-1982 |
| | | | | JP | 57044800 A | 13-03-1982 |

EPO FORM P0459

For more details about this annex : see Official Journal of the European Patent Office, No. 12/82